(19) Europäisches Patentamt
European Patent Office
Office européen des brevets

(11) **EP 1 547 670 B1**

(12) **EUROPÄISCHE PATENTSCHRIFT**

(45) Veröffentlichungstag und Bekanntmachung des Hinweises auf die Patenterteilung:
**26.09.2007 Patentblatt 2007/39**

(51) Int Cl.:
*B01D 61/06* (2006.01)       *B01D 61/10* (2006.01)
*F15B 3/00* (2006.01)        *C02F 1/44* (2006.01)

(21) Anmeldenummer: **04023544.2**

(22) Anmeldetag: **02.10.2004**

(54) **Drucktauschersystem**

Pressure exchanger system

Systeme d'echangeur de pression

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.12.2003 DE 10359332**
           **17.06.2004 DE 102004029231**

(43) Veröffentlichungstag der Anmeldung:
**29.06.2005 Patentblatt 2005/26**

(73) Patentinhaber: **KSB Aktiengesellschaft**
**67227 Frankenthal (DE)**

(72) Erfinder:
• **Brückmann, Fred**
**67098 Bad Dürkheim (DE)**

• **Bruhns, Uwe**
**67574 Osthofen (DE)**
• **Knöbl, Wiltrud**
**67071 Ludwigshafen (DE)**
• **Kochanowski, Wolfgang**
**55452 Windesheim (DE)**

(56) Entgegenhaltungen:
**DE-A- 10 057 613       FR-A- 2 568 321**
**GB-A- 2 204 664       US-A- 5 306 428**

• **PATENT ABSTRACTS OF JAPAN Bd. 2003, Nr. 09, 3. September 2003 (2003-09-03) -& JP 2003 144856 A (SASAKURA ENGINEERING CO LTD), 20. Mai 2003 (2003-05-20)**

EP 1 547 670 B1

**Beschreibung**

Die Erfindung betrifft ein Verfahren zur Regelung eines Drucktauschersystems und ein Drucktauschersystem, bestehend aus mindestens zwei Rohrkammern, mindestens einer angetriebenen Umschaltarmatur für die wechselweise Beaufschlagung der Rohrkammern mit Hochdruckfluid, wobei Mittel zur Gewährleistung einer variablen und/oder diskontinuierlichen Bewegungsgeschwindigkeit eines angetriebenen Umschaltorgans in der Umschaltarmatur vorgesehen sind.

Die US 5 306 428 zeigt an einer Reverse-Osmose-Anlage ein Drucktauschersystem, mit dessen Hilfe eine Energierückgewinnung an der aus Reverse-Osmose-Modulen ausströmenden, einen hohen Restdruck aufweisenden Flüssigkeit, dem sogenannten Brine, erfolgt. Das Drucktauschersystem weist eine Umschaltarmatur mit einem rotierenden Umschaltorgan auf, mit dessen Hilfe eine Umsteuerung der zu befüllenden oder zu entleerenden Rohrkammern erfolgt. Das rotierende Umschaltorgan weist eine Bypassöffnung auf, um während eines Umschaltvorgang des Drucktauschers einen kontrollierten Druckabbau zwischen den zu befüllenden und zu entleerenden Rohrkammern zu ermöglichen. Dies bedingt jedoch zusätzliche Verluste, wodurch der Wirkungsgrad einer solchen Reverse-Osmose-Anlage verschlechtert wird.

Durch die US 5 797 429 ist bei Drucktauschern eine andere Bauart einer Umschaltarmatur bekannt. Dazu ist im Armaturengehäuse ein Umschaltorgan angeordnet, welches als Steuerkolben linear verschiebbar ausgebildet ist, um radial zum Steuerkolben angeordnete Strömungswege umschalten zu können. Diese Lösung versucht einen früheren Stand der Technik zu verbessern, bei mit einer Vielzahl von Armaturen in aufwendiger Weise eine Umsteuerung der Füll- und Entleerungsvorgänge in den Rohrkammern erfolgte.

Die GB 2 204 664 zeigt ein gegensätzliches Prinzip einer Umschaltarmatur in Form eines Kolbenschieberventils analog einem Hydraulikventil. Ein kolbenförmiges Verschlusselement verfügt über mehrere diagonal verlaufende Durchbohrungen oder weist am Außenumfang angeordnete, axial verlaufende Taschen auf. Für eine Umschaltbewegung eines Strömungsweges wird das Verschlusselement zwischen zwei Endlagen axial verschoben. Durch den axialen Verschiebevorgang werden die Wege von Flüssigkeitsströmen umgesteuert. Das Verschlusselement führt keine Rotationsbewegung aus.

In der FR 2 568 321 A ist ein Drucktauschersystem beschrieben, bei dem eine Vielzahl von Armaturen die Umschaltbewegung zwischen zwei Rohrkammern steuern. An jedem Ende einer Rohrkammer ist zur Erfassung der Lage der Phasengrenzen oder der Trennkörper je ein Positionsfühler angeordnet.

Die JP 2003-144856 offenbart ein anderes Prinzip einer Reverse-Osmose-Anlage mit einem Hydraulikkolbensystem zur Erzeugung einer notwendigen Druckenergie. Dazu werden Drucktauscherkolben zwangsweise von Kolbenstangen bewegt, wobei umsteuerbare Hydraulikzylinder die Kolbenstangen antreiben. Das Hydraulikkolbensystem ersetzt die in den anderen Reverse-Osmose-Systemen für einen Druckaufbau notwendigen Kreiselpumpen.

Bei dem vorbekannten Stand der Technik bedingen die wechselweisen Druckbeaufschlagungen und die daraus resultierenden Druckstöße eine erhebliche Materialbeanspruchung aller Bauteile. Dies beeinflusst die Lebensdauer der Armaturen, der Rohrkammern oder einer einzelnen Umschaltarmatur in ungünstiger Weise und erfordert entsprechend materialintensive Dimensionierungen. Zusätzlich ergeben sich während der Umschaltbewegungen erhebliche störende Geräusche mit ihren nachteiligen Folgen. Ein solcher Lärmpegel erfordert zusätzliche und aufwendige Schalldämpfungsmaßnahmen und Schutzmaßnahmen.

Der Erfindung liegt das Problem zugrunde, für Drucktauschersysteme mit mindestens zwei Rohrkammern und einer angetriebenen Umschaltarmatur, die mit einem rotierenden oder linear betriebenen Umschaltorgan versehen ist, eine langfristig betriebssichere und hoch belastbare Lösung zu entwickeln.

Die Lösung dieses Problems sieht vor, dass unmittelbar vor einem Verschluss einer Rohrkammer die Bewegungsgeschwindigkeit des Umschaltorgans in Bezug zur normalen Bewegungsgeschwindigkeit reduziert wird.

Diese Lösung hat den Vorteil der erheblichen Reduzierung der Druckbelastungen aller Bauteile durch die abzubremsenden strömenden Massen der Flüssigkeitsströme. Die in den Bauteilen strömenden Flüssigkeitssäulen, deren Strömungsrichtungen wechselweise umgesteuert werden, um einen Druckaustausch innerhalb der Rohrkammern zu gewährleisten, üben auf alle Bauteile erhebliche Impulskräfte aus. Diese ergeben sich aus der jeweils abzubremsenden Masse und deren Geschwindigkeit. Durch den variablen und/oder diskontinuierlicher Bewegungsablauf des angetriebenen Umschaltorgans beim Absperren von vorher geöffneten Strömungswegen erfolgt eine Abbremsung der Geschwindigkeit eines in eine Rohrkammer einströmenden Massenstromes, wodurch dessen Impuls verringert wird.

Ausgestaltungen sehen vor, dass beim Absperren einer gefüllten Rohrkammer das angetriebene Umschaltorgan eine reduzierte Bewegungsgeschwindigkeit aufweist. Die Bewegungsgeschwindigkeit ist hierbei der Weg des Umschaltorgans über der Zeit. Und eine Reduzierung der Bewegungsgeschwindigkeit des angetriebenen Umschaltorgans erfolgt unmittelbar vor einem Verschluß oder vor einer Absperrung einer Rohrkammer. Mit diesen Maßnahmen wird eine kontrollierte Bewegung der fließenden Massenströme erreicht, wodurch bisher übliche Druckstöße, auch als waterhammer bekannt, beim Verschluss oder Absperrung einer aufgefüllten Rohrkammer weitestgehend vermieden werden. Durch diese neue variable und/oder diskontinuierliche Ansteuerung des angetriebenen Umschaltorgans wird die Druckbelastung des gesamten Systems ganz wesentlich reduziert, da Druckstöße aufgrund von plötzlich abgebremsten Massenströmen wegfallen.

Nach weiteren Ausgestaltungen wird in einer Zeitspanne von einigen Millisekunden bis zu einigen Sekunden die Bewegungsgeschwindigkeit des Umschaltorgans reduziert, wobei diese Zeitdauer abhängig ist von der Baugröße eines Drucktauschers und der Masse einer darin bewegten Flüssigkeit. Die Reduzierung erfolgt innerhalb einer Stellzeit, die als Gesamtzeit einer Zeitdauer für die Veränderung des Zustandes einer vollständig geöffneten bis zu einer vollständig geschlossenen Umschaltarmatur angesehen wird. Dies ermöglicht die Verwendung von grundsätzlich höheren Strömungsgeschwindigkeiten innerhalb des Drucktauschers. Diese Maßnahme steht im völligen Gegensatz zur bisher verwendeten Vorgehensweise, nach der eine kontinuierliche Reduzierung der Strömungsgeschwindigkeiten erfolgte, um Bauteilschäden durch water-hammer zu vermeiden.

Andere Ausgestaltungen sehen vor, dass nach einer Absperrung einer Niederdruck-Rohrkammer in einem Haltepunkt die Bewegungsgeschwindigkeit des Umschaltorgans für eine Verweildauer von einigen Millisekunden bis zu einigen Sekunden auf Null reduziert wird. Zwischen den in den Rohrkammern wechselweise befindlichen Massenströmen mit Hoch- oder Niederdruck bildet sich eine Übergangszone aus, in der eine Durchmischung der wechselweise einströmenden Flüssigkeiten vorliegt. Eine solche Übergangszone kann in jeder Rohrkammer auch durch einen an sich bekannten, stofflich ausgebildeten Trennkörper gebildet werden, wobei ein solcher stofflicher Trennkörper eine genaue Trennung zwischen den auszutauschenden Flüssigkeiten ermöglicht.

Beim Betrieb eines Drucktauschers stellen sich in einer Anlage Betriebszustände ein, aufgrund derer eine Verschiebung der Übergangszonen/Trennkörper in den Rohrkammern und relativ zueinander erfolgt. Um zu vermeiden, dass eine Übergangszone oder ein Trennkörper innerhalb einer Rohrkammer eine falsche Lage einnimmt, ist eine sogenannte Synchronisation dieser Übergangszonen/Trennkörper erforderlich. Für eine Synchronisation findet in einer der Rohrkammern ein Stillstand hinsichtlich der Bewegungsgeschwindigkeit des darin befindlichen Fluid statt, während in einer anderen Rohrkammer, beispielsweise bei einem Zweirohrsystem, noch eine Bewegungsgeschwindigkeit vorliegt.

Mit diesen Lösungen erfolgt in einfachster Weise eine Synchronisation der Geschwindigkeiten von den in den Rohrkammern bewegten Massenströme sowie der Zuordnung der Übergangszonen oder Trennkörper relativ zueinander. Für diejenigen Fälle, in denen innerhalb der Rohrkammern stofflich ausgebildete Trennkörper solche Übergangszonen zwischen den Flüssigkeiten mit unterschiedlichen Druckniveaus bilden, wird deren Synchronisation innerhalb der Rohrkammern erreicht.

Nach der Verweildauer des angetriebenen Umschaltorgans im Haltepunkt erfolgt dessen Beschleunigung auf die normale Bewegungsgeschwindigkeit. Dazu findet ein übliches Antriebselement Verwendung, beispielsweise ein in der Drehzahl und/oder in der Hubbewegung veränderbarer Motor.

Dazu sehen weitere Ausgestaltungen vor, dass ein Antriebsmotor des Umschaltorgans veränderbare Drehzahlen und/oder Hubbewegungen aufweist. Damit wird der Bewegungsablauf des Umschaltorgans in einfacher Weise gesteuert und an die jeweilige Situation in einem Drucktauschersystem angepasst. Dazu ist der Antriebsmotor als ein Servomotor elektrischer, hydraulischer oder hydropneumatischer Bauart ausgebildet ist. Zusätzlich kann der Antriebsmotor mit einer die Geschwindigkeit und/oder Dynamik beeinflussenden Regeleineinrichtung verbunden sein.

Nach weiteren Ausgestaltungen sind an den Rohrkammern mehrere, Position und Bewegung der Trennkörper erfassende Sensoren angeordnet und mit der Steuer- und Regeleinheit verbunden. Und in einem mit dem Drucktauscher verbundenen Rohrleitungssystem kompensiert eine Boosterpumpe einen Druckabfall und in einer Leitung der Boosterpumpe und in einer Abflussleitung der Umschaltarmatur sind regelbare Armaturen nachgeordnet. Auch sind die Boosterpumpe und/oder die Umschaltarmatur mit einem regelbaren Antrieb verbunden. Dabei sind die Sensoren, die regelbare Armaturen und die regelbaren Antriebe mit einer Steuer- und Regeleinheit verbunden. Die Steuer- und Regeleinheit überwacht mittels Sensorsignale die Bewegungsabläufe der Fluidströme in den Rohrkammern und/oder der Trennkörper und verändert bei Abweichungen von vorgegebenen Abläufen durch Übermittlung von Stellsignalen an die regelbaren Armaturen und/oder die regelbaren Antriebe deren Funktion und die Abläufe im Drucktauscher. Damit steuert und regelt die Steuer- und Regeleinheit die Synchronisation des Drucktauschers. Unter einer Synchronisation wird in diesem Zusammenhang das Nachregeln der Fluidgeschwindigkeit in einer Rohrkammer verstanden, wenn in der anderen Rohrkammer eine Geschwindigkeitsänderung stattgefunden hat. Die Bewegungsabläufe innerhalb des Drucktauschers werden auf druckstoßfreie Umschaltvorgänge optimiert.

Vorzugsweise ist die angetriebene Umschaltarmatur einer Hochdruckquelle nachgeordnet. Dies kann beispielsweise der Ausgang eines Reverse-Osmose-Moduls sein, aus dem ein brine unter hohem Restdruck austritt und dessen Druckenergie mit Hilfe des Drucktauschersystems zurückgewonnen wird.

Und nach anderen Ausgestaltungen ist die Umschaltarmatur mit einem oder mehreren, rotierend angetriebenen Umschaltorganen versehen, mit einem oder mehreren, reversierend linear angetriebenen Umschaltorganen versehen, oder das Umschaltorgan führt eine Kombinationsbewegung aus Dreh- und Hubbewegung aus.

Ausführungsbeispiele der Erfindung ist in den Zeichnungen dargestellt und werden im folgenden näher beschrieben. Es zeigen die

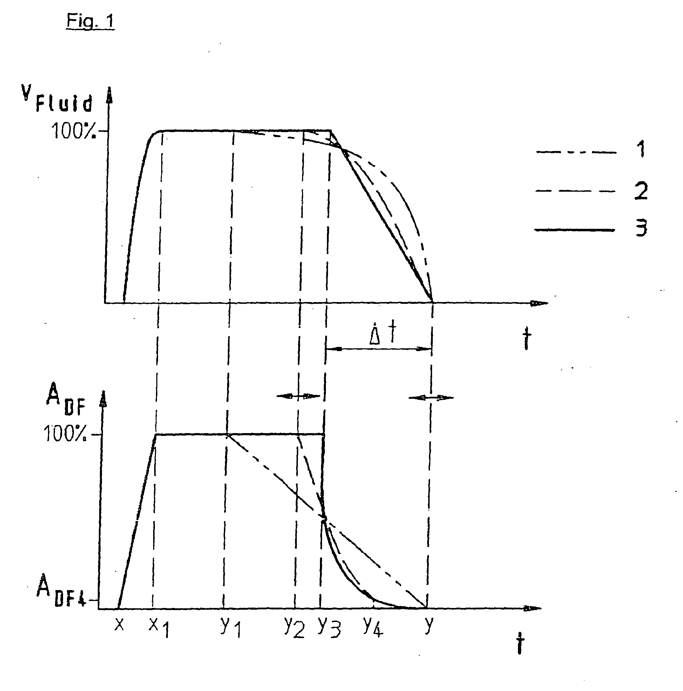

Fig. 1    ein Diagramm und die

Fig. 2    ein Schaltschema einer Anlage

Ein variabler und/oder diskontinuierlicher Bewegungsablauf eines angetriebenen Umschaltorgans ist in der Zeichnung mit Hilfe von zwei untereinander angeordneten Diagrammen dargestellt. In den Diagrammen ist auf den Abszissen jeweils die Zeitachse t dargestellt. Der Bewegungsablauf ist unabhängig von der Bauart eines Umschaltorgans, welches Drehbewegungen und/oder Linearbewegungen ausführen kann.

Die über den Zeitachsen aufgetragenen Kurvenverläufe beziehen sich auf einen Zyklus von einer Befüllung einer Rohrkammer mit Fluid. Dabei stellt der Punkt x auf der Zeitachse t den Anfangszeitpunkt eines Füllvorganges einer Rohrkammer dar, während der Punkt y einem zeitlichen Ende eines Füllvorganges entspricht.

Im unteren Diagramm ist auf der Ordinate der Durchflussquerschnitt $A_{DF}$ aufgetragen. Er entspricht derjenigen Fläche, die während eines zwischen den Rohrkammern erfolgenden Umschaltvorganges in der Umschaltarmatur vom Umschaltorgan geöffnet und wieder geschlossen wird. Während eines Zeitraumes x - y läuft ein Zyklus eines Füllvorgangs einer - hier nicht dargestellten - Rohrkammer ab. Vom Beginn einer Öffnungsbewegung im Zeitpunkt x bis zum späteren Zeitpunkt $x_1$ öffnet sich der Durchflussquerschnitt $A_{DF}$ innerhalb einer Umschaltarmatur vollständig. In Abhängigkeit von einem aufzufüllenden Volumen einer Rohrkammer bleibt der Durchflussquerschnitt $A_{DF}$ bis zum Zeitpunkt $y_1$ vollständig geöffnet.

Bei Drucktauschersystemen nach dem Stand der Technik startet bereits zu dem Zeitpunkt $y_1$ der Schließvorgang einer Rohrkammer durch ein Umschaltorgan einer Umschaltarmatur. Entlang der strichpunktiert dargestellten Linie 1 läuft ein bei $y_1$ frühzeitig einsetzender, zeitlich kontinuierlicher und bei y endender Schließvorgang in der Umschaltarmatur ab. Der Durchflussquerschnitt $A_{DF}$ der Umschaltarmatur wird entlang der strichpunktierten Linie 1 im Zeitraum $y_1$ - y geschlossen. Der frühzeitige Beginn zum Zeitpunkt $y_1$ ist notwendig, um die Anlagenbelastung durch die Impulskräfte der in einer Rohrkammer strömenden Flüssigkeitssäule zu reduzieren. Trotz einem solchen frühzeitigen Beginn einer Schließbewegung ergeben sich im Zeitpunkt y erhebliche nachteilige Druckpulsationen, die sich unter anderem auch in den bekannten und sehr lästigen Lärmbelastungen auswirken.

Erfindungsgemäß beginnt ein variabler und/oder diskontinuierlicher Schließvorgang einer Rohrkammer erst wesentlich später im Zeitpunkt $y_2$. Der Schließvorgang erfolgt entlang der gestrichelten Linie 2 und stellt einen gesteuerten, zeitlich diskontinuierlichen und/oder variablen Bewegungsablauf dar, der ebenfalls zum Zeitpunkt y beendet ist. Bei einem erfindungsgemäßen Schließvorgang erfolgt gegenüber dem Stand der Technik eine schnellere und zeitlich kürzere Schließbewegung des Umschaltorgans, Der Beginn einer Reduzierung des zu 100% geöffneten Durchflussquerschnitt $A_{DF}$ erfolgt erst im wesentlich späteren Zeitpunkt $y_2$ und eine Querschnittsreduzierung ist bis zum Zeitpunkt $y_4$ weitgehend abgeschlossen. Im anschließenden Zeitraum $y_4$ - y erfolgt dann eine langsame Schließbewegung des verbleibenden, nur noch kleinen Durchflussquerschnitt $A_{DF4}$. Der langsame Verschluss des kleinen Durchflussquerschnittes $A_{DF4}$ der Umschaltarmatur auf einen Wert Null reduziert zuverlässig das Geräuschniveau und die Bildung von Druckstößen.

Durch diese zeitliche Verzögerung kurz vor dem endgültigen Ende einer Schließbewegung wird die Impulskraft der strömenden Massen in dem sich nur noch allmählich verschließenden Durchflussquerschnitt $A_{DF4}$ problemlos abgebaut und ein Schließvorgang nahezu drucklos beendet. Als Folge davon ergeben sich nahezu geräuschlose Schließvorgänge bei den Umschaltvorgängen innerhalb einer Umschaltarmatur und in einem solchen Drucktauschersystem. Als zusätzlicher Vorteil ergibt sich eine wesentlich geringere Materialbelastung durch verminderte Druckpulsationen.

Dem Idealfall entspricht die durchgezogene Linie 3 zwischen den Zeitpunkten $y_3$ und y. Hier wird der Schließvorgang zu einem noch späteren Zeitpunkt $y_3$ eingeleitet und der zu 100% geöffnete Durchflussquerschnitt $A_{DF}$ in sehr kurzer Zeit bis zum Zeitpunkt $y_4$ auf den Durchflussquerschnitt $A_{DF4}$ überwiegend abgeschlossen. Danach werden in der Zeitspanne $y_4$ - y durch einen zeitlich längeren oder langsameren Schließvorgang die vorhandenen Impulskräfte im sich nur relativ allmählich verkleinernden Durchflussquerschnitt $A_{DF4}$ abgebaut. Dieser theoretische Idealfall ist aufgrund von Masseträgheiten der Bauteile und Totzeiten in einer Regelung nicht erreichbar. Mit einem entsprechenden Antrieb ist es möglich, sich dem Idealfall der Kurve 3 im kritischen Bereich zwischen $y_3$ und $y_4$ sehr stark anzunähern. Ein den Idealfall erfüllender Antrieb müsste in unverhältnismäßig kurzer Zeit das Umschaltorgan aus der Ruhelage nahezu in die Schließstellung bewegen. Massenträgheiten und die bekannten Bauarten von Antrieben lassen solche Beschleunigungen nur bedingt zu.

Ein jeweils Anwendung findender Antriebsmotor, dessen Auswahl von den zu bewegenden oder abzusperrenden Massen abhängig ist, ermöglicht die gewünschten zeitlich gesteuerten Bewegungsabläufe des Umschaltorgans innerhalb der Umschaltarmatur. Dies kann sowohl ein stufenlos steuerbarer Servomotor als auch ein zwei- oder mehrstufiger Antrieb mit verschiedenen Geschwindigkeitsstufen sein.

Mit Hilfe einer zusätzlichen - hier nicht dargestellten - Regeleinrichtung besteht die Möglichkeit, die Lage der verschiedenen Zeitpunkte $y_2$ - y auf der horizontalen Zeitachse zu verschieben. Im Diagramm ist dies durch horizontal angeordnete Doppelpfeile an den Zeitlinien $y_2$ und $y_4$ symbolisiert. Mit Hilfe von einfachen Sensoren, beispielsweise Schallsensoren, kann bei auftretenden unzulässigen Geräuschsituationen, die durch veränderte Anlagen- oder durch Bauteilbedingungen entstehen, in einfachster Weise durch eine Verschiebung der Zeitpunkte $y_x$ eine einfache Regelung des Drucktauschersystems erfolgen. Damit wird gewährleistet, dass der geometrische Punkt, in dem in der Umschaltarmatur der Durchflussquerschnitt $A_{DF}$ gerade dicht geschlossen ist, mit dem Zeitpunkt y zusammenfällt. Somit können Bauteiltoleranzen in einfachster Weise regelungstechnisch kompensiert werden.

Im oberen Diagramm der Zeichnung ist auf der Ordinate die Fluidgeschwindigkeit $V_{Fluid}$ über der Zeitachse t aufgetragen. Alle auf der oberen Zeitachse t aufgetragenen Zeitpunkte x - y entsprechen den entsprechenden Zeitpunkten des unteren Diagramms. Aus dem oberen Diagramm ist die schnelle Geschwindigkeitszunahme bei der Füllung einer Rohrkammer mit Fluid vom Beginn des Öffnens im Zeitpunkt x der Umschaltarmatur durch ein Umschaltorgan ersichtlich. Im Zeitpunkt x1 hat die Fluidgeschwindigkeit $V_{Fluid}$ annähernd ihr Maximum erreicht, um danach auf annähernd gleichem Niveau zu bleiben.

Bei den Drucktauschern nach dem bekannten Stand der Technik wird analog der strichpunktierten Kurve 1 bereits zum Zeitpunkt $y_1$ die Schließbewegung des Umschaltorgans eingeleitet, um während der großen Zeitdauer $y_1$ - y und im Zeitpunkt y eine Rohrkammer vollständig abzusperren. Ein solcher konstant ablaufender Schließvorgang gemäß der Kurve 1, der die Abnahme der Fluidgeschwindigkeit $V_{Fluid}$ innerhalb einer Rohrkammer zeigt, bis diese durch das Umschaltorgan vollständig versperrt ist, ist in diesem Diagramm als eine an sich bekannte mathematische Funktion abgebildet.

Erfindungsgemäß erfolgt aufgrund des variabel und/oder diskontinuierlich ablaufenden Schließvorganges die Einleitung der Schließbewegung des Umschaltorgans zum späteren Zeitpunkt $y_2$. Sie verläuft in gesteuerter Weise entlang der gestrichelt dargestellten Kurve 2 im kürzeren Zeitraum $y_2$ - y und ist zum Zeitpunkt y beendet. Im oberen Diagramm ist deutlich erkennbar, dass vor dem Endpunkt y der Kurve 2 auf der Zeitachse t die Geschwindigkeitsabnahme des Fluid über einen größeren Zeitraum stattfindet, wodurch die Impulsbelastung auf das Gesamtsystem wesentlich reduziert wird.

Der aufgrund von Bauteiltoleranzen nur bedingt erreichbare Idealfall zeigt die in diesem Diagramm als Gerade ausgebildete, durchgezogene Linie 1. Die Abnahme der Fluidgeschwindigkeit $V_{Fluid}$ erfolgt kontinuierlich ab dem Zeit-punkt $y_3$ in dem kürzesten Zeitraum $\Delta t$ zwischen den Zeitpunkten $y_3$ und y aufgrund der variablen und/oder diskontinuierlichen Schließbewegung des Umschaltorgans einer Umschaltarmatur. Der theoretische Idealzustand ist erreicht, wenn sich

$$dv_{Fluid} / dt = const. \qquad (1)$$

verhält. Infolge der üblichen Bauteil-Toleranzen in einer Drucktauscheranlage ergibt sich dieser Idealzustand nur in seltenen Fällen.

Insgesamt wird mit der diskontinuierlichen Schließbewegung des Umschaltorgans die Impulsbelastung eines Drucktauschersystem entscheidend verbessert und eine daraus resultierende Geräuschbelastung sehr stark eingeschränkt. Weiter werden höherer Fluidgeschwindigkeiten in den Rohrkammern realisiert und damit die Wirtschaftlichkeit eines solchen Drucktauschersystems in erheblichem Maße verbessert.

Die in den Rohrkammern wechselweise bewegten Flüssigkeitssäulen besitzen aufgrund ihrer Strömungsgeschwindigkeiten eine Impulskraft, welches der Bewegungsgröße eines Körpers entspricht, die nach der Formel

$$I = m * v_{Fluid}^2 \qquad (2)$$

ermittelt wird. Bei einer Absperrung einer Rohrkammer wird eine darin strömende Flüssigkeitssäule in ihrer Bewegung abgebremst, wodurch sich eine Impulsänderung in der Form von

$$\Delta I = I \qquad (3)$$

ergibt. Da die Impulsänderung $\Delta I$ der Bedingung

$$\Delta I = F * \Delta t \qquad\qquad (4)$$

entspricht, ergibt sich bei einer Gleichsetzung der Formeln (1) und (3)

$$F * \Delta t = m * v_{Fluid}^2 \qquad\qquad (5)$$

Da die Druckbelastung des Drucktauschersystems proportional zur Kraft F ist, mit der beim Abbremsen der Impuls der bewegten Flüssigkeitssäule auf das Drucktauschersystem einwirkt, weil

$$p = F / A \qquad\qquad (6)$$

ist, wird durch eine Vergrößerung von $\Delta t$ die Druckbelastung in einfachster Weise verringert. Durch den variablen und/ oder diskontinuierlicher Bewegungsablauf der Umschaltarmatur beim Absperren von vorher geöffneten Strömungswegen ergibt sich daher eine wesentlich reduzierte Impulsbelastung für das Gesamtsystem. Es wurde erfindungsgemäß erkannt, dass erst auf dem letzten Teil einer Gesamtbewegung des angetriebenen Umschaltorgans eine deutliche Verringerung der Bewegungsgeschwindigkeit w die Druckbelastung des Drucktauschersystems in gleichem Maße reduziert. Dies hat den wesentlichen Vorteil der einfacheren Einflussnahme. Durch geringe zeitliche Änderungen des Bewegungsablaufes bei einem Schließvorgang werden die Impulskräfte überproportional beeinflusst, wodurch insgesamt im Drucktauschersystem höhere Durchsatzmengen und Durchströmgeschwindigkeiten erreichbar sind bei gleichzeitig verringerten Bauteilabmessungen.

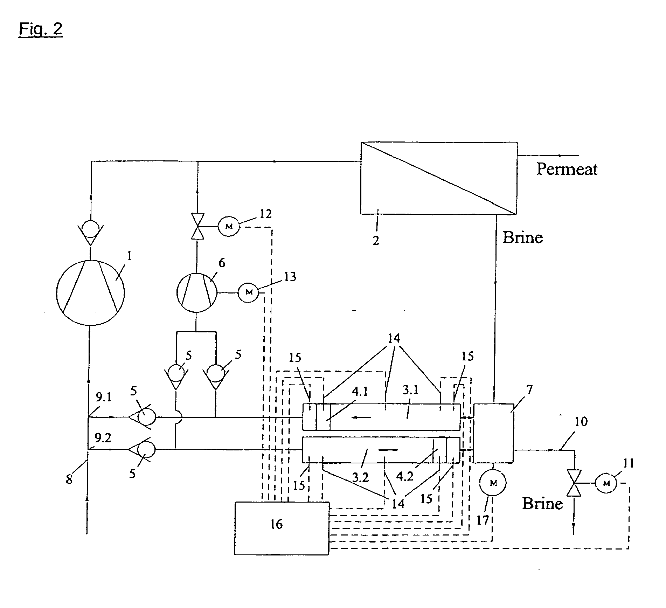

Fig.2 zeigt als Beispiel ein Schaltschema eines Rohrleitungssystems einer Reverse-Osmose-Anlage, in der eine Hochdruckpumpe 1 ein zu behandelndes Fluid, gewöhnlich Wasser in Form von See-, Meer-, Brack- oder auch Abwasser, zu einem oder mehreren Reverse-Osmose-Modulen 2 fördert. Infolge des hohen osmotischen Druckes innerhalb dieser Module 2 tritt an den darin angeordneten Membranen ein Abscheideeffekt auf. Hinter den Membranen fließt gereinigte Flüssigkeit, das sogenannte Permeat, mit geringem Druck ab, wird gesammelt und einer weiteren Verwendung zugeführt.

Nach dem Abscheideprozess fließt aus den Reverse-Osmose-Modulen 2 ein vor den Membranen befindliches Fluid ab, das sogenannte Brine, welches eine höhere Konzentrationsdichte an Schadstoffen aufweist, gewöhnlich Salze, und zur ursprünglichen Quelle abgeleitet wird. Um den hohen Energieinhalt in Form von Druckenergie auszunutzen, wird das Brine über eine Umschaltarmatur 7 zur Energierückgewinnung in einen Drucktauscher geleitet, der hier als 2-Kammer-Drucktauscher dargestellt ist. In dessen Rohrkammern 3.1, 3.2 sind unter Druckeinfluss verschiebbare Trennkörper 4.1, 4.2 angeordnet, die eine Trennung zwischen jeweils zwei unterschiedlich mit Druck beaufschlagten Räumen einer Rohrkammer und deren Flüssigkeiten bewirken. Es sind auch Anlagen mit Rohrkammern ohne Trennkörper bekannt, jedoch kann es darin zu unerwünschten Durchmischungen zwischen den verschiedenen Flüssigkeiten kommen, wenn das System aus dem Gleichgewicht gerät oder dessen Steuerzeiten nicht mehr stimmen.

Der hohe Druck des aus einem oder mehreren Reverse-Osmose-Modulen 2 austretenden Brine drückt in der Fig. 2 einen oberen, in einer ersten Rohrkammer 3.1 befindlichen Trennkörper 4.1 zur von der Umschaltarmatur 7 entfernt liegenden Seite. Dabei wird der hohe Druck auf ein anderes, links vom Trennkörper 4.1 in der Rohrkammer 3.1 befindliches oder auf der von der Umschaltarmatur 7 entfernt liegenden Kolbenseite befindliches Fluid übertragen. Der hohe Druck wird auf ein druckärmeres Fluid, auch Speisefluid genannt, übertragen. Dieses einer Leitung 8 entnommene Speisefluid kann auf die verschiedensten Arten zugeführt werden und ist nicht auf die dargestellte Ausführungsform beschränkt.

Dieses Fluid tritt anschließend mit hohem Druck auf der linken Seite der oberen Rohrkammer 3.1 des Drucktauschers aus und strömt durch Rückschlagarmaturen 5 einer Boosterpumpe 6 zu, die innerhalb des Rohrleitungssystems angeordnet ist. Die Rückschlagarmaturen 5 verhindern eine Rückströmung des nun energiereicheren Fluid in die Leitung 8. Die Boosterpumpe 6 kompensiert nur noch denjenigen geringen Druckabfall, der beim osmotischen Prozess in den Reverse-Osmose-Modulen 2 entsteht. Infolge der Energierückgewinnung durch den Drucktauscher erbringt die Boosterpumpe 6 nur noch diejenige Druckdifferenz, die innerhalb der Reverse-Osmose-Module 2 verloren geht. Die Hochdruckpumpe 1 ist deshalb wesentlich kleiner und damit kostengünstiger gestaltet, als bei einer Anlage ohne Energierückgewinnung.

Eine zu behandelndes Fluid, auch Speisefluid genannt, strömt der Hochdruckpumpe 1 durch die Leitung 8 zu. Als von der Leitung 8 abgehend gezeichnet sind hier zwei Abzweigung 9.1, 9.2 mit Rückschlagarmaturen 5, durch die ein Teilstrom des Fluid oder Speisefluid den Rohrkammern 3.1, 3.2 des Drucktauschers zuströmt. Für die Funktion der Anlage ist diese Art der Zuführung nicht verbindlich. Es können auch andere Arten einer Fluidzuführung zu dem Drucktauscher und die Hochdruckpumpe 1 Verwendung finden. Relevant ist lediglich, dass in den zu den Rohrkammern 3.1, 3.2 führenden Leitungen 9.1 und 9.2 ein Vordruck besteht, welcher ausreicht, ein Fluid durch die Rückschlagventile 5 und einen Trennkörper 4.1 oder 4.2 vom Rohrkammerende auf der Seite der Rückschlagventile 5 zum anderen Rohrkammerende auf der Seite der Umschaltarmatur 7 zu bewegen.

Erreicht der Trennkörper 4.1 innerhalb der ersten Rohrkammer 3.1 sein in der Zeichnung linkes Rohrkammerende, welches auf Seiten der Rückschlagarmaturen 5 befindlich ist, dann wird die Umschaltarmatur 7 umgeschaltet, wodurch für die erste Rohrkammer 3.1 nunmehr eine Verbindung zu einem Bereich mit niedrigem Druck hergestellt wird. Der Vordruck eines jetzt aus der Zuführung 9.1 nachströmenden Speisefluids reicht aus, um den Trennkörper 4.1 mit frischen Fluid und das in der Rohrkammer 3.1 befindliche, nunmehr entspannte Brine nach rechts zur Umschaltarmatur 7 und aus der oberen Rohrkammer 3.1 heraus zudrücken. Der Abfluss des Brine erfolgt durch die Umschaltarmatur 7 und eine damit verbundene Leitung 10. Während des Ausstoßvorganges des Brine aus der ersten Rohrkammer 3.1 wird über die Umschaltarmatur 7 gleichzeitig die untere zweite Rohrkammer 3.2 mit dem hohen Druck des Brine beaufschlagt.

Der Ausstoßvorgang eines entspannten Brine ist in der Fig. 2 in der zweiten unteren Rohrkammer 3.2 dargestellt. Durch entsprechende zyklische Umschaltungen der Umschaltarmatur 7 erfolgt eine wechselweise Druckbeaufschlagung der beiden Rohrkammern 3.1, 3.2 und damit eine effiziente Energierückgewinnung.

Beim Umschaltvorgang eines Drucktauschers entstehen Druckstöße, welche die Membranen innerhalb der Reverse-Osmose-Module 2 gefährden. Erfindungsgemäß erfolgt eine Regelung der Anlage, wobei in der von der Umschaltarmatur 7 das Brine abführenden Leitung 10 eine regelbare Armatur 11 angeordnet ist. Zusätzlich ist im Bereich der Boosterpumpe 6 eine weitere regelbare Armatur 12 angeordnet oder die Boosterpumpe 6 ist alternativ mit einem regelbaren Antrieb 13 versehen.

Die Rohrkammern 3.1, 3.2 sind mit mehreren Sensoren 14 und 15 versehen, wobei die Sensoren 14 einerseits der Lageermittlung und anderseits zur Ermittlung der jeweiligen Geschwindigkeit der Trennkörper 4.1, 4.2 dienen. Die Sensoren 15 dienen zur Erfassung von möglichen Endlagen der Trennkörper. Alle Sensorsignale werden in eine Steuer- und Regeleinheit 16 eingespeist, welche Stellsignale an den Stellmotor 17 der Umschaltarmatur 7, die regelbare Armaturen 11, 12 beziehungsweise an eine regelbare Armatur 11 und den regelbaren Antrieb 13 der Boosterpumpe 6 liefert. Die regelbaren Armaturen 11, 12 können als eine Armatur mit Stellantrieb oder als eine Armatur mit Stellungsregler ausgebildet sein. Es sind Bauarten, mit deren Hilfe eine genaue Abfolge von Schaltungen für die gesamte Anlage durch eine Steuer- und Regeleinheit 16 möglich ist.

Um einen störungsfreien Betrieb von solchen Reverse-Osmose-Membranen zu gewährleisten, erfolgt ein kontinuierlicher Speisestrom zu den Membranen. Dies wird sichergestellt durch eine unterschiedliche Bewegungsgeschwindigkeit der Trennkörper in den Rohrkammern. Die Pfeile in der Zeichnung zeigen die Bewegungsrichtung der Trennkörper. Im Ausführungsbeispiel von Fig. 2 wird die Rohrkammer 3.1 gerade mit Hochdruckfluid gefüllt, während die untere Rohrkammer 3.2 mit frischem Speisefluid beaufschlagt wird und ein druckentspanntes Brine gerade über die Leitung 10 abfließt. Hierbei bewegt sich der Trennkörper 4.2 in der mit Niederdruck beaufschlagten unteren Rohrkammer 3.2 mit höherer Geschwindigkeit, als der Trennkörper 3.1 in der mit Hochdruck beaufschlagten Hochdruckkammer 3.1. Aus diesem Grunde erreicht der Trennkörper 3.2 zuerst seinen Umkehrpunkt am Ende der Rohrkammer. Das Erreichen des Umkehrpunktes wird von dem Sensor 14 an die Steuer- und Regeleinheit 16 übermittelt, woraufhin von dieser ein Stellsignal an den Antriebsmotor 17 der Umschaltarmatur 7 geliefert wird. Die Umschaltarmatur 7 schaltet und die Drücke in den Rohrkammern 3.1 und 3.2 werden getauscht. Zu diesem Zeitpunkt kehrt der in der Endlage befindliche Trennkörper 4.2 seine Bewegungsrichtung um und wird in die entgegengesetzte Richtung zu den Rückschlagarmaturen 5 hin beschleunigt, so dass zu diesem Zeitpunkt beide Trennkörper 4.1, 4.2 ein Hochdruckfluid in die Richtung der Boosterpumpe 6 liefern. Die Zeitdauer, in der beide Kammern 3.1, 3.2 und deren Trennkörper ein Hochdruckfluid in Richtung der Boosterpumpe 6 liefern, liegt im Sekundenbereich, bevor der Trennkörper 4.1 der Rohrkammer 3.1 seinen Umkehrpunkt erreicht.

Weitere Sensoren 15 sind an den Enden jeder Rohrkammer angeordnet und gewährleisten eine Signalübermittlung an die Steuer- und Regeleinheit 16, falls auf Grund von geänderten Betriebsbedingungen ein Trennkörper eine solche End- oder auch Totlage erreichen sollte. In diesem Fall liefern die Sensoren 15 ein Alarmsignal, mit dessen Hilfe die Steuer- und Regeleinheit 16 durch Stellsignale an die regelbaren Armaturen bzw. an den Antrieb der Boosterpumpe und/oder den Antrieb der Umschaltarmatur 7 eine neue Synchronisation des Bewegungsablaufes der Trennkörper startet. In diesem Zusammenhang wird als Synchronisation das Nachregeln der Fluidgeschwindigkeit in einer Rohrkammer bezeichnet, wenn in der anderen Rohrkammer eine Geschwindigkeitsänderung stattgefunden hat. Dieser Synchronisations-Effekt tritt auch ein, wenn nur der Drucktauscher geregelt wird. In diesem Fall folgt die Boosterpumpe über ihre Drosselkurve.

Mit Hilfe der Sensoren 14 werden sowohl die jeweiligen Umkehrpunkte, als auch die Geschwindigkeiten der Trennkörper 4.1, 4.2 für jeden Drucktausch-Zyklus eines Drucktauschers gemessen, so dass jede Betriebsbedingung ermittelt wird durch die Veränderung der Kolbengeschwindigkeit. Dies gilt sowohl für einen Anfahrbetrieb und auch für einen Abfahrbetrieb einer mit einem solchen Drucktauscher ausgerüsteten Anlage.

Mit Hilfe des Antriebsmotors 17 an der Umschaltarmatur 7 ergibt sich der wesentliche Vorteil, dass die Steuer- und Regeleinheit 16 von Umschaltzyklus zu Umschaltzyklus und sogar auch noch während eines Umschaltzyklus sofort reagieren kann. Weiterhin ergibt sich der Vorteil, dass die Steuer- und Regeleinheit 16 den Betrieb und die Synchronisation mehrerer Drucktauscher in Parallel- oder in HintereinanderSchaltung zuverlässig regeln kann. Die ständige Geschwindigkeitsmessung des Durchflusses in den Rohrkammern 3.1, 3.2 des Drucktauschers bietet den weiteren Vorteil, dass diese Daten mit Hilfe eines Interfaces direkt an die Boosterpumpe der Anlage weitergeleitet werden, wenn diese über einen drehzahlgeregelten Antrieb 13 verfügt. Sollte die Boosterpumpe jedoch nur einen Antrieb mit fester Drehzahl aufweisen, dann kann hinter der Boosterpumpe 6 eine Leistungsbeeinflussung durch eine als Drosselarmatur wirkende regelbare Armatur stattfinden.

Verwendete Formelzeichen

A =　　　　Fläche, in m$^2$
$A_{DF}$　　　Durchflußfläche, in m$^2$
F =　　　　Kraft, in N
p =　　　　Druck, in bar
I =　　　　Impuls, in kgm/s
$\Delta$I =　　　Impulsänderung, in kgm/s
m =　　　　Masse, in kg
w =　　　　Bewegungsgeschwindigkeit des Umschaltorgans, in °/s oder m/s
$\Delta$t =　　　Zeitänderung, in s
$V_{Fluid}$ =　　Fluidgeschwindigkeit in einer Rohrkammer, in m/s

**Patentansprüche**

1. Verfahren zur Regelung eines Drucktauschersystems, bestehend aus mindestens zwei Rohrkammern (3.1, 3.2), mindestens einer angetriebenen Umschaltarmatur(7) für eine wechselweise Beaufschlagung der Rohrkammern mit Hochdruckfluid, wobei Mittel zur Gewährleistung einer variablen oder diskontinuierlichen Bewegungsgeschwindigkeit eines angetriebenen Umschaltorgans in der Umschaltarmatur(7) vorgesehen sind, **dadurch gekennzeichnet, dass** unmittelbar vor einem Verschluss einer Rohrkammer (3.1, 3.2) die Bewegungsgeschwindigkeit des Umschaltorgans in Bezug zur normalen Bewegungsgeschwindigkeit reduziert wird.

2. Verfahren nach Anspruch 1 **dadurch gekennzeichnet, dass** in einer Zeitspanne ($y_4$, y) von einigen Millisekunden bis zu einigen Sekunden die Bewegungsgeschwindigkeit (w) des Umschaltorgans reduziert wird.

3. Verfahren nach Anspruch 1 oder 2, dass nach einer Absperrung einer Niederdruck-Rohrkammer in einem Haltepunkt die Bewegungsgeschwindigkeit (w) des Umschaltorgans für eine Verweildauer von einigen Millisekunden bis zu einigen Sekunden auf 0 reduziert ist.

4. Verfahren nach Anspruch 1, 2 oder 3, **dadurch gekennzeichnet, dass** nach der Verweildauer im Haltepunkt das Umschaltorgan auf die normale Bewegungsgeschwindigkeit (w) beschleunigt wird.

5. Verfahren nach einem der Ansprüche 1 bis 4, **dadurch gekennzeichnet, dass** ein Antriebsmotor (17) des Umschaltorgans als ein Servomotor elektrischer, hydraulischer oder hydropneumatischer Bauart ausgebildet ist und mit veränderbaren Drehzahlen und/oder Hubbewegungen die Bewegungsgeschwindigkeit verändert.

6. Verfahren nach Anspruch 5, **dadurch gekennzeichnet, dass** eine Regeleinrichtung die Geschwindigkeit und/oder Dynamik des Antriebsmotors (17) beeinflusst.

7. Verfahren nach einem der Ansprüche 1 bis 7, **dadurch gekennzeichnet, dass** die Steuer- und Regeleinheit (16) mittels Sensorsignale die Bewegungsabläufe der Fluidströme in den Rohrkammern (3.1, 3.2) und/oder der Trennkörper (4.1, 4.2) überwacht und bei Abweichungen von vorgegebenen Abläufen durch Übermittlung von Stellsignalen an die regelbaren Armaturen (11, 12) und/oder die regelbaren Antrieb (13, 17) deren Funktion und die Bewegungsabläufe im Drucktauscher verändert.

8. Drucktauschersystem mit mindestens zwei Rohrkammern zur Durchführung des Verfahrens nach einem oder mehreren der Ansprüche 1 bis 7, mit mindestens einer angetriebenen Umschaltarmatur für eine wechselweise Druckbeaufschlagung der Rohrkammern, wobei ein angetriebenes Umschaltorgan in der Umschaltarmatur angeordnet ist und Mittel zur Gewährleistung einer variablen oder diskontinuierlichen Bewegungsgeschwindigkeit des Umschaltorgans angeordnet sind, **dadurch gekennzeichnet, dass** die Rohrkammern (3.1, 3.2) mit die Geschwindigkeit und Lage von Trennkörpern (4.1, 4.2) erfassenden Sensoren (14, 15) versehen sind, dass die Umschaltarmatur (7) mit einem regelbaren Antrieb (17) verbunden ist und dass die Sensoren (14, 15) und der regelbare Antrieb (17) mit einer Steuer- und Regeleinheit (16) verbunden ist.

9. Drucktauschersystem nach Anspruch 8, **dadurch gekennzeichnet, dass** in einem mit dem Drucktauscher verbundenen Rohrleitungssystem eine Boosterpumpe (6) einen Druckabfall kompensiert und dass in einer Leitung der Boosterpumpe und in einer Abflussleistung (10) der Umschaltarmatur (7) regelbare Armaturen (11, 12) angeordnet sind.

10. Drucktauschersystem nach Anspruch 9, **dadurch gekennzeichnet, dass** die Boosterpumpe (6) mit einem regelbaren Antrieb (13) verbunden ist.

11. Drucktauschersystem nach Anspruch 10, **dadurch gekennzeichnet, dass** die regelbaren Armaturen (11, 12) und der regelbare Antrieb der Boosterpumpe (13) mit der Steuer- und Regeleinheit (16) verbunden sind.

12. Drucktauschersystem nach einem der Ansprüche 8 bis 11, **dadurch gekennzeichnet, dass** die Steuer- und Regeleinheit (16) eine Synchronisation des Drucktauschers steuert und regelt.

13. Drucktauschersystem nach einem der Ansprüche 8 bis 12, **dadurch gekennzeichnet, dass** die Steuer- und Regeleinheit (16) mit an den Rohrkammern (3.1, 3.2) angeordneten Sensoren (14, 15), dem regelbaren Antrieb (17) der Umschaltarmatur (7), dem regelbaren Antrieb der Armatur (11) in der Abflussleitung der Umschaltarmatur (7) und/oder dem regelbaren Antrieb (13) der Boosterpumpe (6) oder dem regelbaren Antrieb (12) der regelbaren Armatur in der Abflussleitung der Boosterpumpe (6) verbunden sind.

14. Drucktauschersystem nach einem der Ansprüche 8 bis 13, **dadurch gekennzeichnet, dass** in den Rohrkammern (3.1, 3.2) Trennkörper (4.1, 4.2) angeordnet sind.

15. Drucktauschersystem nach einem der Ansprüche 8 bis 14, **dadurch gekennzeichnet, dass** die Umschaltarmatur (7) mit einem oder mehreren, rotierend angetriebenen Umschaltorganen versehen ist.

16. Drucktauschersystem nach einem der Ansprüche 8 bis 15, **dadurch gekennzeichnet, dass** die Umschaltarmatur (7) mit einem oder mehreren, reversierend linear angetriebenen Umschaltorganen versehen ist.

17. Drucktauschersystem nach einem der Ansprüche 8 bis 16, **dadurch gekennzeichnet, dass** das Umschaltorgan eine Kombinationsbewegung aus Dreh- und Hubbewegung ausführt.

## Claims

1. Method for regulating a pressure exchanger system consisting of at least two tubular chambers (3.1, 3.2), and of at least one driven changeover fitting (7) for acting alternately upon the tubular chambers with highpressure fluid, means being provided for ensuring a variable or discontinuous speed of movement of a driven changeover member in the changeover fitting (7), **characterized in that**, immediately before a closing of a tubular chamber (3.1, 3.2), the speed of movement of the changeover member is reduced with respect to the normal speed of movement.

2. Method according to Claim 1, **characterized in that** the speed of movement (w) of the changeover member is reduced in a time span ($y_4$, y) of a few milliseconds up to a few seconds.

3. Method according to Claim 1 or 2, **characterized in that**, after a shut-off of a low-pressure tubular chamber, at a holding point the speed of movement (w) of the changeover member is reduced to 0 for a dwell time of a few milliseconds to a few seconds.

4. Method according to Claim 1, 2 or 3, **characterized in that**, after the dwell time at the holding point, the changeover member is accelerated to the normal speed of movement (w).

5. Method according to one of Claims 1 to 4, **characterized in that** a drive motor (17) of the changeover member is designed as a servomotor of electrical, hydraulic or hydropneumatic type of construction and varies the speed of movement with variable rotational speeds and/or lifting movements.

6. Method according to Claim 5, **characterized in that** a regulating device influences the speed and/or dynamics of the drive motor (17).

7. Method according to one of Claims 1 to 7, **characterized in that** the control and regulation unit (16), by means of sensor signals, monitors the movement sequences of the fluid streams in the tubular chambers (3.1, 3.2) and/or the separating bodies (4.1, 4.2), and, in the event of deviations from predetermined sequences, by transmitting actuating signals to the regulatable fittings (11, 12) and/or the regulatable drives (13, 17), varies their functioning and the movement sequences in the pressure exchanger.

8. Pressure exchanger system having at least two tubular chambers for carrying out the method according to one or more of Claims 1 to 7, with at least one driven changeover fitting for acting alternately upon the tubular chambers with pressure, a driven changeover member being arranged in the changeover fitting, and means being arranged for ensuring a variable or discontinuous speed of movement of the changeover member, **characterized in that** the tubular chambers (3.1, 3.2) are provided with sensors (14, 15) detecting the speed and position of separating bodies (4.1, 4.2), **in that** the changeover fitting (7) is connected to a regulatable drive (17), and **in that** the sensors (14, 15) and the regulatable drive (17) are connected to a control and regulation unit (16).

9. Pressure exchanger system according to Claim 8, **characterized in that**, in a pipeline system connected to the pressure exchanger, a booster pump (6) compensates a pressure drop, and **in that** the booster pump is arranged in a line and regulatable fittings (11, 12) are arranged in an outflow line (10) of the changeover fitting (7).

10. Pressure exchanger system according to Claim 9, **characterized in that** the booster pump (6) is connected to a regulatable drive (13).

11. Pressure exchanger system according to one of Claims 8 to 10, **characterized in that** the sensors (14, 15), the regulatable fittings (11, 12) and the regulatable drive (13) of the booster pump are connected to the control and regulation unit (16).

12. Pressure exchanger system according to one of Claims 8 to 11, **characterized in that** the control and regulation unit (16) controls and regulates a synchronization of the pressure exchanger.

13. Pressure exchanger system according to one of Claims 8 to 12, **characterized in that** the control and regulation unit (16) is connected to sensors (14, 15) arranged on the tubular chambers (3.1, 3.2), to the regulatable drive (17) of the changeover fitting (7), to the regulatable drive of the fitting (11) in the outflow line of the changeover fitting (7) and/or to the regulatable drive (13) of the booster pump (6) or to the regulatable drive (12) of the regulatable fitting in the outflow line of the booster pump (6).

14. Pressure exchanger system according to one of Claims 8 to 13, **characterized in that** separating bodies (4.1, 4.2) are arranged in the tubular chambers (3.1, 3.2).

15. Pressure exchanger system according to one of Claims 8 to 14, **characterized in that** the changeover fitting (7) is provided with one or more changeover members driven in rotation.

16. Pressure exchanger system according to one of Claims 8 to 15, **characterized in that** the changeover fitting (7) is provided with one or more changeover members driven linearly in reversal.

17. Pressure exchanger system according to one of Claims 8 to 16, **characterized in that** the changeover member executes a combined movement consisting of a rotational and of a lifting movement.

**Revendications**

1. Procédé de régulation d'un système d'échangeur de pression, se composant d'au moins deux chambres tubulaires (3.1, 3.2), d'au moins une armature de commutation motorisée (7) pour une alimentation alternative des chambres tubulaires en fluide à haute pression, dans lequel il est prévu des moyens pour garantir une vitesse de déplacement variable ou discontinue d'un organe de commutation motorisé dans l'armature de commutation (7), **caractérisé en ce que** la vitesse de déplacement de l'organe de commutation est réduite par rapport à une vitesse de déplacement normale, immédiatement avant une fermeture d'une chambre tubulaire (3.1, 3.2).

2. Procédé selon la revendication 1, **caractérisé en ce que** la vitesse de déplacement (w) de l'organe de commutation est réduite pendant une durée ($y_4$, y) de quelques millisecondes à quelques secondes.

3. Procédé selon la revendication 1 ou 2, **caractérisé en ce que**, après un blocage d'une chambre tubulaire à basse pression à un point d'arrêt, la vitesse de déplacement (w) de l'organe de commutation est réduite pour une durée de séjour de quelques millisecondes à quelques secondes.

4. Procédé selon la revendication 1, 2 ou 3, **caractérisé en ce que**, après la durée de séjour au point d'arrêt, l'organe de commutation est accéléré à la vitesse de déplacement normale (w).

5. Procédé selon l'une quelconque des revendications 1 à 4, **caractérisé en ce qu'**un moteur d'entraînement (17) de l'organe de commutation est un servomoteur de type électrique, hydraulique ou hydropneumatique et change la vitesse de déplacement avec des vitesses de rotation et/ou des mouvements de levée variables.

6. Procédé selon la revendication 5, **caractérisé en ce qu'**un dispositif de réglage influence la vitesse et/ou la dynamique du moteur d'entraînement (17).

7. Procédé selon l'une quelconque des revendications 1 à 6, **caractérisé en ce que** l'unité de commande et de réglage (16) surveille au moyen de signaux de capteurs les évolutions des mouvements des courants de fluide dans les chambres tubulaires (3.1, 3.2) et/ou des corps de séparation (4.1, 4.2) et, en cas d'écarts par rapport à des évolutions prédéterminées, change, en transmettant des signaux de réglage aux armatures réglables (11, 12) et/ou aux entraînements réglables (13, 17), le fonctionnement de ceux-ci et les évolutions des mouvements dans l'échangeur de pression.

8. Système d'échangeur de pression avec au moins deux chambres tubulaires pour la mise en oeuvre du procédé selon l'une quelconque des revendications 1 à 7, comportant au moins une armature de commutation motorisée pour une alimentation alternative des chambres tubulaires, dans lequel un organe de commutation motorisé est disposé dans l'armature de commutation et il se trouve des moyens pour garantir une vitesse de déplacement variable ou discontinue de l'organe de commutation, **caractérisé en ce que** les chambres tubulaires (3.1, 3.2) sont pourvues de capteurs (14, 15) détectant la vitesse et la position de corps de séparation (4.1, 4.2), **en ce que** l'armature de commutation (7) est reliée à un entraînement réglable (17) et **en ce que** les capteurs (14, 15) et l'entraînement réglable (17) sont reliés à une unité de commande et de réglage (16).

9. Système d'échangeur de pression selon la revendication 8, **caractérisé en ce qu'**une pompe d'appoint (6) compense une baisse de pression dans un système de conduites tubulaires relié à l'échangeur de pression et **en ce que** des armatures réglables (11, 12) sont disposées dans une conduite de la pompe d'appoint et dans une conduite d'évacuation (10) de l'armature de commutation (7).

10. Système d'échangeur de pression selon la revendication 9, **caractérisé en ce que** la pompe d'appoint (6) est reliée à un entraînement réglable (13).

11. Système d'échangeur de pression selon l'une quelconque des revendications 8 à 10, **caractérisé en ce que** les armatures réglables (11, 12) et l'entraînement réglable (13) de la pompe d'appoint sont reliés à l'unité de commande et de réglage (16).

12. Système d'échangeur de pression selon l'une quelconque des revendications 8 à 11, **caractérisé en ce que** l'unité de commande et de réglage (16) commande et règle une synchronisation de l'échangeur de pression.

13. Système d'échangeur de pression selon l'une quelconque des revendications 8 à 12, **caractérisé en ce que** l'unité de commande et de réglage (16) est reliée à des capteurs (14, 15) disposés dans les chambres tubulaires (3.1, 3.2), à l'entraînement réglable (17) de l'armature de commutation (7), à l'entraînement réglable de l'armature (11) dans la conduite d'évacuation de l'armature de commutation (7) et/ou à l'entraînement réglable (13) de la pompe d'appoint (6) ou à l'entraînement réglable (12) de l'armature réglable dans la conduite d'évacuation de la pompe d'appoint (6).

**14.** Système d'échangeur de pression selon l'une quelconque des revendications 8 à 13, **caractérisé en ce que** des corps de séparation (4.1, 4.2) sont disposés dans les chambres tubulaires (3.1, 3.2).

**15.** Système d'échangeur de pression selon l'une quelconque des revendications 8 à 14, **caractérisé en ce que** l'armature de commutation (7) est pourvue d'un ou de plusieurs organes de commutation, entraîné(s) en rotation.

**16.** Système d'échangeur de pression selon l'une quelconque des revendications 8 à 15, **caractérisé en ce que** l'armature de commutation (7) est pourvue d'un ou de plusieurs organes de commutation entraîné(s) en mouvement linéaire réversible.

**17.** Système d'échangeur de pression selon l'une quelconque des revendications 8 à 16, **caractérisé en ce que** l'organe de commutation exécute une combinaison de mouvements de rotation et de levée.

Fig. 1

Fig. 2

Permeat

Brine

Brine

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5306428 A
- US 5797429 A
- GB 2204664 A
- FR 2568321 A
- JP 2003144856 A